# EUROPEAN PATENT APPLICATION

(11) **EP 1 588 751 A1**
(43) Date of publication of application: **26.10.2005**
(21) Application number: 03812342.8
(22) Date of filing: 28.11.2003
(51) Int. Cl.: B01D 17/00, B01D 61/00, B01D 71/36, C07C 231/24, C07C 231/02, C07C 231/08, C07B 63/00

(54) **TOOL AND METHOD FOR SEPARATING WATER IN ORGANIC SOLVENT CONTAINING WATER DISPERSED THEREIN**

(30) Priority: 03.12.2002 JP 2002350710; 16.05.2003 JP 2003138687
(71) Applicant: Wako Pure Chemical Industries, Ltd., Osaka-shi, Osaka 540-8605 (JP)
(72) Inventor: DAVID, Godwin Cork, Toyonaka-shi, Osaka 560-0013 (JP); INOUE, Kunihisa, Osaka-shi, Osaka 540-8605 (JP)
(74) Representative: Schirdewahn, Jürgen
(86) International application number: PCT/JP2003/015238
(87) International publication number: WO 2004/050209

(57) **Abstract**

To provide a water separation device and a water separation method in which an object in a water dispersion organic solvent is not adsorbed and neither contaminated, and water can be separated and removed in a short period of time irrespective of specific gravity of an organic layer in the water separation organic solvent, **characterized in that** a water separation membrane is provided on a rising surface between a lower end and an upper end of a tubular member, and a water dispersion organic solvent is filtrated by the water separation membrane to thereby separate water to cause the organic solvent to pass through.

## Description

### TECHNICAL FIELD

This invention relates to a water separation device for separating and removing water from a water dispersion organic solvent device and a water separation method, and in more detail, a water separation apparatus for removing water produced mainly by an organic chemical reaction or water used for post-processing, and a water separation method.

### BACKGROUND ART

In the steps carried out when an organic compound is manufactured, it is often that water is by-produced by reaction or, post-processing using water such that extraction and washing by water is carried out. Therefore, it was necessary for isolating an organic compound to carry out processing for removing water by separating or dewatering.

Dewatering processing for removing water as described above had been carried out conventionally by separating using a separation funnel, or causing a sample (water dispersion organic solvent) to pass through a syringe column filled with a dewatering agent such as Glauber' s salt or zeolite to adsorb water on the dewatering agent.

However, the above-described conventional methods had the following problems.

That is, many liquids to be processed (water dispersion organic solvent) cannot be subjected to simultaneous parallel processing (high through-put processing) by the separation funnel.

When the dewatering agent is used, (1) Due to the nonspecific adsorption of an object in the liquid to be processed on the dewatering agent, a measurement error of the object (lowering of yield caused by adsorption of the object) brings forth. (2) Since a degree of the nonspecific adsorption is different between lots, a measurement error of the object is produced between lots. (3) Since time for processing a liquid to be processed is different between lots, application to automation is not suitable. (4) It is necessary for flowing out an object adsorbed on the column to use a solvent, as a result of which it takes long time for processing. (5) The liquid to be processed is contaminated by flowing out material from the dewatering agent, giving rise to lowering of purity of an object.

Further, a method for separating a water layer from an organic layer using a tube (syringe) having a filter mounted on a flat portion at the lower part has been employed. However, this method had a problem that the liquid to be processed containing an organic layer whose specific gravity is heavier than water is merely used.

This invention has been accomplished in order to solve such a problem as noted above. It is an object of the invention to provide a water separation device and a water separation method in which an object in a water dispersion organic solvent as a liquid to be processed is not adsorbed and neither contaminated, water can be separated and removed in a short period of time, water separation is enabled irrespective of specific gravity of an organic layer, and which can be used for simultaneous parallel processing (high through-put processing) capable of processing much liquids to be processed simultaneously.

### DISCLOSURE OF THE INVENTION

The structure of the present invention for achieving the aforementioned object is characterized in that a water separation membrane is provided on a rising surface between a lower end and an upper end of a tubular member, and a water dispersion organic solvent is filtrated by the water separation membrane to thereby separate water.

Preferably, the tubular member is formed so that the lower end is closed, and an inlet for the water dispersion organic solvent is provided at the upper part, and further, the tubular member is positioned within an outer tube having a sample discharge outlet at the lower part, and the organic solvent after separation of water is caused to pass through from the inside to the outside of the tubular member.

Preferably, an opening at the upper end of the tubular member is formed so as to have a large diameter, the tubular member is fitted in the outer tube and stopped at the outer tube at the large diameter portion so that the tubular member can be detachably separated, thus enabling washing easily. More preferably, in such as case as described, an air escape hole is provided at the upper part of the outer tube.

Preferably, the side surface or bottom surface of the tubular member is formed as a slope toward lower end which converges on a extreme end and the water separation membrane is secured to an opening formed in the slope. By doing so, even if the upper end of the tubular member is tightly fitted in the outer tube, the filtrated organic solvent can be flown out smoothly, and a filtration area can be made large. It is noted that if the water separation membrane is constituted so as to reach a position of the bottom surface of the tubular member, the organic solvent whose specific gravity is heavier than water can be also removed, separation between water and the organic solvent can be carried out easily irrespective of specific gravity of the organic solvent in the liquid to be processed (water dispersion organic solvent).

Preferably, a plurality of outer tubes as recesses are formed in a plate at intervals, and the tubular member is fitted in the outer tubes to form a water separation device to thereby provide a water separation device for simultaneous parallel processing (high through-put processing) of much liquids to be processed (water dispersion organic solvent). In this case, preferably, a plurality of inner tubes may also be constituted to be connected whereby assembly of a filter and washing operation are facilitated.

Preferably, as the water separation membrane, a hydrophobic and solvent insoluble membrane filter is used, and as the membrane filter, it is preferably made of Teflon (Registered trademark).

Preferably, the pore size of the membrane filter is 0.1 to 2 *µ*m.

Preferably, the tubular member and the outer tube are formed of metal, glass or plastics.

The water separation method of the present invention is characterized in that a water dispersion organic solvent is filtrated by the water separation membrane provided on a rising surface between a lower end and an upper end of a tubular member, and to thereby separate water to cause an organic solvent to pass through.

Further, preferably, in the water separation method of the present invention, the tubular member is formed so that the lower end is closed, and a inlet for the water dispersion organic solvent is provided at the upper part, and the tubular member is positioned within an outer tube having a sample discharge outlet at the lower part, and the liquid to be processed (water dispersion organic solvent) is caused to pass through from the inside to the outside of the tubular member, whereby separating operation can be carried out well. Further, preferably, the liquid to be processed is caused to pass through from the inside to the outside of the tubular member by natural dropping.

Preferably, the water dispersion organic solvent as a liquid to be processed is a reaction liquid in the organic synthesis or a processed liquid after reaction. The processed liquid after reaction termed herein is a reaction liquid in which processing for removing impurities or the like applied to the reaction liquid, for example, a processed liquid in which impurities soluble in water being dissolved in the organic solvent are removed by adding water or an aqueous solution.

In summary, the gist of the present invention lies in that a water separation membrane is provided on the side of a tubular member or the rising surface such as a slope whereby even if water is sunk in the lower end, the organic solvent can be passed smoothly from the rising surface. If the water separation membrane is provided on the flat bottom surface like a normal filter, water covers the water separation membrane, and therefore the organic solvent cannot be filtrated. Thus, the fact that a hydrophobic membrane filter is used for the rising surface as in the present invention to separate water from the organic solvent has not at all been carried out in the past. According to the present invention, it is possible to separate water from all the organic solvents irrespective of specific gravity of the organic solvents.

The rising surface termed in the present invention means a surface moving up from the lower end, for example, means a side surface, or a slope inclined downward with the side surface or bottom surface toward the extreme end.

Further, to separate water in the present invention is not to remove water completely but the greater part of water is removed, and since water dissolved in the organic solvent cannot be separated, even if some water to a degree that not bring forth a trouble for isolating an object from the organic solvent is contained in the organic solvent, it is allowed.

The recovery rate of the organic solvent obtained by separating water using the water separation device of the present invention somewhat varies depending upon the organic solvent used because solubility of the organic solvent into water is different according to the kind thereof, but normally, it is 90% or more, preferably, 95% or more, more preferably, 98% or more.

### BRIEF DESCRIPTION OF THE DRAWINGS

FIG. 1 is a perspective view showing one embodiment of the present invention.
FIG. 2 (a) is a plan view and FIG. 2 (b) is a sectional view, respectively, in the state that an inner tube is loosely fitted in an outer tube.
FIG. 3 is a perspective view showing another embodiment of the inner tube of the present invention.
FIG. 4 (a) is a plan view, FIG. 4(b) is a front view, and FIG. 4 (c) is a side view, respectively, showing another embodiment of an inner tube of the present invention.
FIG. 5 (a) is a front view, FIG. 5 (b) is a plan view, and FIG. 5 (c) is a side view, respectively, showing another embodiment of an outer tube of the present invention.
FIG. 6 is a sectional view showing another embodiment of the present invention.
FIG. 7 is a sectional view showing another embodiment of the present invention.
FIG. 8 is a sectional view showing still another embodiment of the present invention.

### BEST MODE FOR CARRYING OUT THE INVENTION

The embodiments of the present invention will be described hereinafter with reference to the drawings.

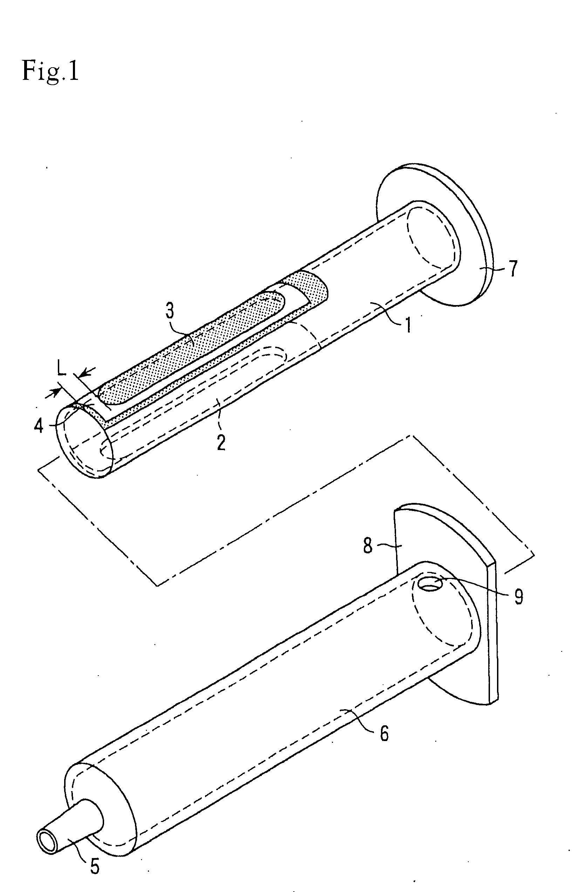

FIG. 1 shows one embodiment of the present invention, in which in the outer periphery of a tubular member 1 having a lower end closed and an upper end opened a downwardly long and slender slit 2 is formed opposedly, and a water separation membrane 3 is secured to the slit 2. The slit 2 is formed at predefined height L from the bottom surface of the tubular body 1 and a water housing portion 4 is formed between the bottom surface and the slit. This height L may be set to predefined length according to the amount of water to be separated. It is noted that since water does not pass through the water separation membrane at normal pressures, L may be zero (0).

The tubular member 1 is loosely fitted in an outer tube 6 having an organic solvent discharge outlet 5 having a lower end formed funnel-like so that it may come into contact and stop with a flange 8 on the upper end of the outer tube 6 and a flange 7 formed on the upper end of the tubular member 1. Further, the outer tube 6 is provided with an air escaping hole 9 (air escape hole), which is necessary when the water dispersion solvent is separated from water by natural dropping, thereby enabling smooth flow-out of the filtrated organic solvent.

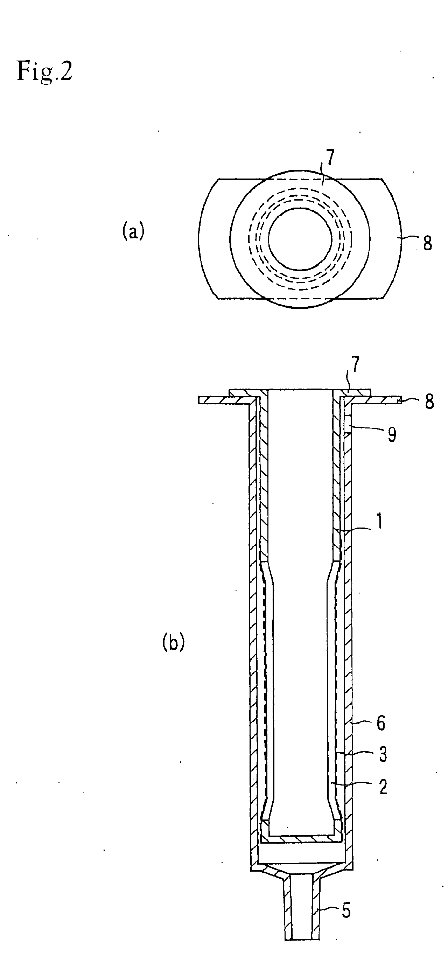

As shown in FIG. 2, the tubular member 1 and the outer tube 6 are formed with a clearance therebetween to a degree that a liquid may pass between the water separation membrane 3 and the outer tube 6. The function of the outer tube is to smoothly flow-out the organic solvent filtrated, which is used to enable to prevent the crystal or the like from separating out on a filter as a result of vaporization of the organic solvent, and prevent the organic solvent from flying up, and further eliminate the entry of impurities.

The above-described water separation device is to separate water by passing-through the liquid to be processed from inside to outside of the tubular member 1. It may be constituted so that an inner tube is sit on in an opening of the bottom surface of the outer tube, water is caused to pass through from outside (between the inner tube and the outer tube) to inside of the inner tube, and the organic solvent filtrated is discharged from the opening of the bottom surface of the outer tube, but preferably, the structure as shown in the above-describe figure is employed so that the tubular member can be separated from the outer tube easily.

The liquids to be processed in the present invention include all of an organic solvent, or a lipaphilic solvent, or an oil or the like, in which water is mixed in them, but particularly, a reaction liquid (water dispersion organic solvent) in organic synthesis or inorganic synthesis in an laboratory is most suitable. Particularly, a reaction liquid, in the organic synthesis, among them, a reaction liquid, in which water is added during reaction or after reaction, is suitable. It is noted that the water dispersion organic solvents also include oils such as salad oil, Tenpura oil or the like, whereas by using the tubular device of the present invention, only water can be thrown away without throwing away oil, and therefore, it can be also said that the present invention provides an device in consideration of environment

The organic solvents that can be liquids to be processed may be organic solvents that are insoluble in water; for example, there can be mentioned chloroform, dichloromethane ethyl acetate, hexane, ether and the like. Ones such as ethyl acetate, hexane, ether and the like which are lighter in specific gravity than water are particularly effective. Further, those which are heavier in specific gravity than water, for example, such as dichloromethane, chloroform or the like can be separated.

The water dispersion organic solvent will suffice if water and the organic solvent are present in the mixed form and are separated, and more specifically, preferably, a water layer is separated from an organic layer. Further, the ratio of amount of water to the organic solvent may be such that either is greater.

Water termed in the present invention include not only normal water but also a hydrophilic solution not dissolved in the organic solvent, that is, all the aqueous solutions having no affinity with the organic solvent.

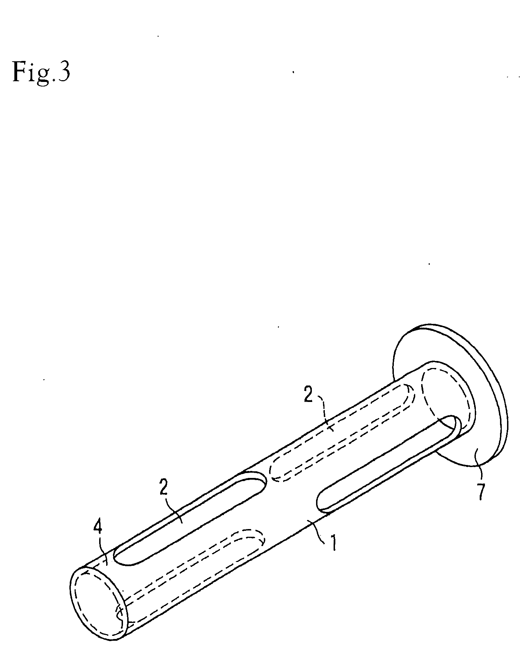

FIG. 3 shows another embodiment of the tubular member according to the present invention, in which for quickening a separation speed, a number of slits (elongated slits)2 are formed alternately and vertically in the outer periphery of the tubular member 1, an upper surface of which is covered with a water separation membrane (not shown). By forming so, the structure is strong and it is possible to quicken a filtering speed.

While in the above-described embodiment, the slits are formed in the tubular member, it is noted that grid-like openings or net-like opening will also suffice, and the shape of the openings is not particularly restricted.

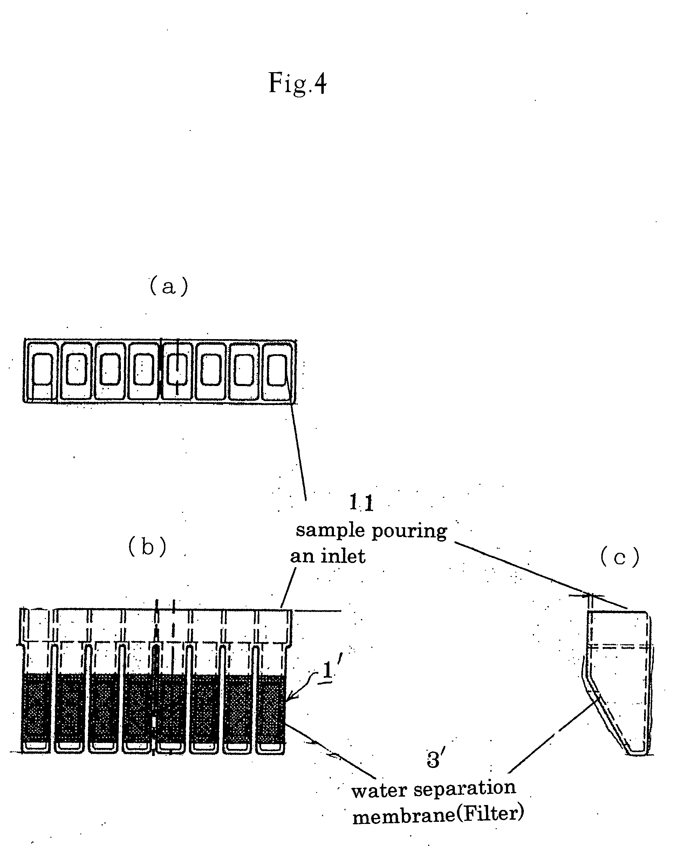

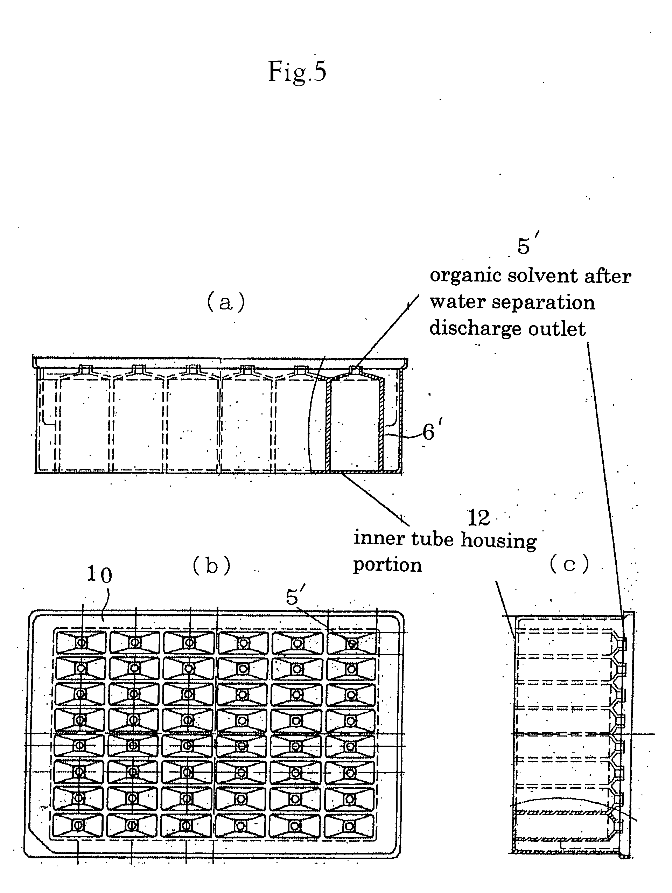

FIGS. 4 and 5 show still another embodiment of the present invention, in which a plurality of filters comprising an inner tube (tubular member) 1' and an outer tube 6' are connected to form a connected filter.

The connected inner tube is so configured that as shown in FIG. 4, a plurality (8) of tubular members (square) 1' having a lower end closed and an upper end formed into a large-diameter sample pouring port an inlet 11 are connected laterally, one side is formed in an inclined side (downward inclined surface) that becomes convergent as it comes to closer to the extreme end, and a water separation membrane 3' is attached to an opening formed in the inclined side.

The connected outer tube is so configured that as shown in FIG. 5, a plurality (8 in a longitudinal direction and 6 in a lateral direction) of tubular members (square) 6' having a lower end formed in a funnel-like organic solvent discharge outlet 5' as a recess in a plate (square) 10 are formed at intervals in a longitudinal direction and in a lateral direction. It is noted that in the above-described embodiment, the organic solvent discharge outlet 5' projects somewhat from the lower surface of the plate 10.

In the above-described embodiment, the connected inner tubes of FIG. 4 are fitted in 6 rows in total longitudinally in an upper end opening (inner tube housing portion) 12 of the connected outer tube of FIG. 5 to form a connected filter.

The above-described water separation device is suitable for simultaneously water-separating many kinds of organic solvent samples because many filters are connected. Further, since the water separation membrane (filter) 3' is obliquely installed (adhered), a contact area between the sample and the filter is large, thus enabling to shorten the separation time. Further, if the filter is installed (adhered) to a position of the lower end of the rising surface, the separation efficiency of the organic solvent heavier in specific gravity than water can be enhanced.

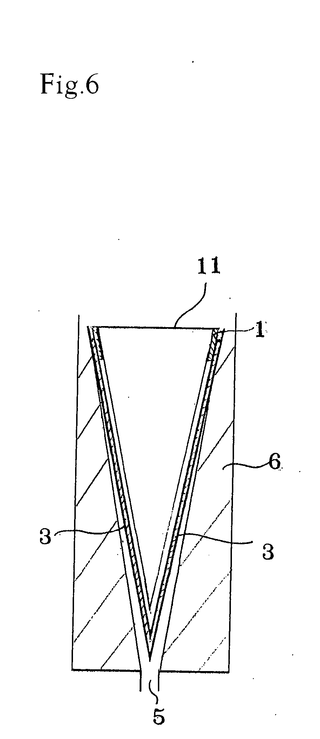

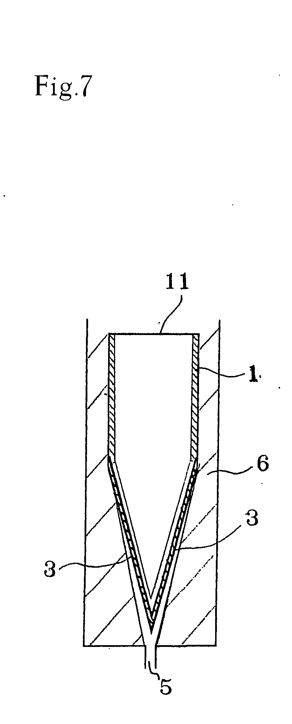

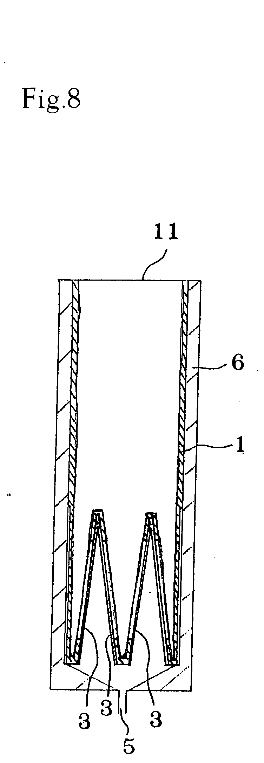

FIGS. 6 to 8 show a further embodiment of the present invention. FIG. 6 shows an example in which both sides of an inner tube are inclined so that a rising portion is a V-shape; FIG. 7 shows an example in which lower portions of both sides of an inner tube are inclined so as to be a V-shape rising surface; and FIG. 8 shows an example in which a plurality (even a single will suffice, of course) of angled concave rising portions are formed in the bottom surface. It is noted that water separation membranes 3, 3 are attached to the V-shape rising surfaces of FIGS. 6 and 7, and the angled rising surface of FIG. 8.

The water separation membrane used in the present invention may be solvent insoluble and water impermeable hydrophobic. Specifically, a membrane filter is preferable, that formed of a hydrophobic material is preferable, a membrane filter made of, for example, polypropylene or Teflon (Registered trademark) is particularly preferable, and a membrane filter made of Teflon (Registered trademark) is most preferable. Other than the membrane filter, for example, a water separation membrane processed by spraying silicone or Teflon (Registered trademark) on the surface of solvent insoluble fiber so as to be hydrophobic.

In case of using the membrane filter, its pore size is normally 0.1 to 2 *µ*m, preferably 0.2 to 1 *µ*m, and particularly preferably 0.5 to 1 *µ*m. If the pore size is too large, water permeated, and if too small, the flow speed lowers, resulting in longer in processing time.

The water separation membrane may be fixed to the inner surface or the outer surface of a tubular member (inner tube), but preferably, it is secured to the outer surface in terms of easiness of preparation.

Materials for the tubular members 1, 1' and the outer tubes 6, 6' used are suitable materials not dissolved in sample (organic solvent solution) such as metal, glass, plastic (polypropylene, polyethylene or the like) or the like, but particularly preferably, plastic is used to form them.

In the following, there is shown embodiments in which water is actually separated from reaction liquid of organic synthesis using the water separation device of the present invention. The used water separation membrane is a membrane filter made of Teflon (Registered trademark) of the pore size 1 *µ*m (this is available under the goods name of TF (PTFE) 1000 from Nihon Pole Co. Limited).

### EMBODIMENT 1 (Example in which a water separation device of an inner tube 5 ml is used to synthesize a compound library)

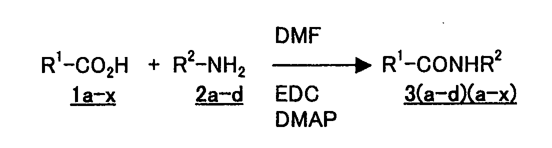

N, N-dimethylformamide (DMF) solution of 24 kinds of alkyl-carboxilic acids (1 a-x) (0.072 mmol) were put into 24 reaction vessels sequentially. Then, DMF solution (0.72 ml) containing 1-ethyl-3-(3-dimethylaminopropyl) carbodimide hydrochloride (EDC)(13.8 mg, 0.072 mmol), and 4- (N, N-dimethyl) aminopyridine (DMAP) (4.4 mg, 0.036 mmol) were added, and further, DMF solution (0.5 ml) of one kind of alkylamine (2a) (0.06 mmol) was added in that order at room temperature, and stirred for 16 hours at room temperature. The similar operation was also carried out with respect to other three kinds of amine (2b-d), and 96 kinds of reactions were carried out simultaneously. The respective reaction liquids were diluted with ethyl acetate (3.5 ml), to which water (2 ml) was added to in, and stirred and stayed. A greater part of a lower layer was removed using a separatory funnel, and again 5% of citric acid aqueous solution (2 ml) was added to it, stirred and stayed. A greater part of a lower layer was removed using a separatory funnel, and water (2 ml) was added to it, stirred and stayed. A greater part of a lower layer was removed using a separatory funnel, and 5% of sodium bicarbonate aqueous solution (2 ml) was added to in, stirred and stayed. A greater part of a lower layer was removed using a separatory funnel, and again, 5% of sodium bicarbonate aqueous solution (2 ml) was added to it, stirred and stayed. A greater part of a lower layer was removed using a separatory funnel, and water (2 ml) was added to it, stirred and stayed. An ethyl acetate layer portion together with a water layer portion are made to pass through the water separation device of the present invention as shown in FIGS. 1 and 2 to remove the water layer portion and obtain an ethyl acetate layer portion rarely containing water in vial. A part (0.002 ml) of the ethyl acetate layer was diluted by a mixed solution (1 ml) of 1 to 1 of water and acetonitrile, and was measured by LC-MS to confirm the purity and structure of the respective compounds. The solvent was removed under reduced pressure, after which an object compound 3(a-d)(a-x) was obtained.

### EMBODIMENT 2 (Example in which a water separation device of inner tube 60 ml was used for synthesis)

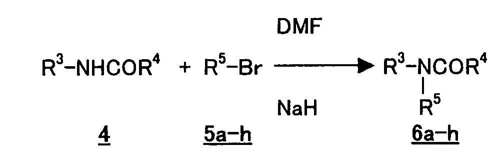

Hydro-sodium (576 mg, 14.4 mmol) was added to DMF (40 ml) of a compound 4 (3.52 g, 12mmol) solution under ice cooling, and stirred at room temperature for 15 minutes in that state. Then, benzyl bromide (2.46 g, 14.4 mmol) was added under ice cooling and stirred all night at room temperature. DMF was removed under reduced pressure, after which ethyl acetate (50 ml) and water (30 ml) were added to it, stirred for 10 minutes and thereafter stayed. A greater part of the lower layer was sucked up and removed, after which 0.1 NHCl aqueous solution (20 ml) was added to it, stirred for 10 minutes and thereafter stayed. In the similar method, the lower layer was removed, after which water (30 ml) was added to it, stirred for 10 minutes and thereafter stayed. In the similar method, a greater part of the lower layer was removed, after which the remaining solution was caused to pass through the water separation device of the present invention to remove the water layer portion and obtain an ethyl acetate layer rarely containing water. The solvent was removed under reduced pressure, after which it was refined by silica gel column chromatography to obtain 3.00 g (yield 65%) of a compound 5a. The above-described operation was carried out in parallel using 8 kinds of bromide reagents (5a-h) to obtain respective corresponding 6a-h (2.9 to 4.8 g, 57 to 99%).

### EMBODIMENT 3

A dispersion liquid having water 5 ml and various kinds of organic solvents 5 ml mixed was caused to pass through the water separation device of the present invention to separate the organic solvent from water. As the organic solvent, five kinds, ethyl acetate, hexane, diethyl ether, chloromethane, and chloroform were used.

As a result, the amount of the obtained organic solvent was in the range of 4.6 to 4.9 ml. A small amount of organic solvent sometimes remained between the inner tube and the outer tube depending upon the kind of the solvent, and a small amount of water was sometimes dissolved in the solvent (less than 1% normally, and 5% or so at maximum).

From the aforementioned results, it was found that if the water separation device of the present invention is used, most of water can be removed, and the organic solvent can be obtained with high recovery rate (more than about 90%).

According to the present invention, the water dispersion organic solvent is filtrated by the water separation membrane provided on the rising surface of the tubular member, whereby even if water is sunk on the lower end, water in the organic solvent can be separated smoothly.

### INDUSTRIAL APPLICABILITY

According to the present invention, the water separation membrane is provided on the rising surface of the tubular member whereby water can be separated smoothly from the water dispersion organic solvent irrespective of specific gravity of the organic solvent in the water dispersion organic solvent, and therefore, the invention is expected to be popularized as device for separating water from a reaction liquid containing the organic solvent by high through-put processing particularly capable of simultaneously processing a number of liquids to be processed.

## Claims

1. A water separation device **characterized in that** a water separation membrane is provided on a rising surface between a lower end and an upper end of a tubular member, and a water dispersion organic solvent is filtrated by said water separation membrane to thereby separate water.

2. The water separation device according to Claim 1, wherein said tubular member is one that the lower end is closed, and an inlet for the water dispersion organic solvent is provided at the upper part.

3. The water separation device according to Claim 2, wherein said tubular member is positioned within an outer tube having a discharge outlet of an organic solvent after separation of water at the lower part.

4. The water separation device according to Claim 3, wherein the upper end of the tubular member is formed to be a large diameter, and said tubular member is fitted in said outer tube and stopped at the upper end of the outer tube at said large diameter portion.

5. The water separation device according to Claims 1 to 4, wherein the side surface or bottom surface of said tubular member is formed as a slope toward lower end which converges on an extreme end, and said water separation membrane is secured to an opening formed in said slope.

6. The water separation device according to Claims 5, wherein a plurality of outer tubes as recesses are formed in a plate at intervals, and said tubular member is fitted in said outer tubes

7. The water separation device according to Claims 1, wherein said water separation membrane is a hydrophobic and organic solvent insoluble membrane filter.

8. The water separation device according to Claims 7,wherein said membrane filter is made of Teflon (Registered Trademark).

9. The water separation device according to Claims 8, wherein the pore size of said membrane filter is 0.1 to 2 *µ*m.

10. The water separation device according to Claims 1, wherein said tubular member and said outer tube are formed of metal, glass or plastics.

11. A water separation method **characterized in that** a water dispersion organic solvent is filtrated by the water separation membrane provided on a rising surface between a lower end and an upper end of a tubular member to thereby separate water.

12. The water separation method according to Claim 11, wherein said tubular member is formed so that the lower end is closed and an inlet for the water dispersion organic solvent is provided at the upper part, and the tubular member is positioned within an outer tube having a sample discharge outlet at the lower part, and the organic solvent after separation of water is caused to pass through from the inside to the outside of said tubular member.

13. The water separation method according to Claim 12, wherein the side surface or the bottom surface of said tubular member are formed as a slope toward lower end which converges on an extreme end, and said water separation membrane is secured to an opening formed in said slope.

14. The water separation method according to Claim 11, wherein said water separation organic solvent is a reaction liquid in organic chemical reaction or a processed liquid after reaction.
